# EUROPÄISCHE PATENTSCHRIFT

(11) **EP 1 222 433 B1**
(45) Veröffentlichungstag und Bekanntmachung des Hinweises auf die Patenterteilung: **13.04.2011**
(21) Anmeldenummer: 00992281.6
(22) Anmeldetag: 05.10.2000
(51) Int. Cl.: F28D 20/02, F25D 16/00, F25B 39/02

(54) **WÄRMETAUSCHER, WIE VERDAMPFER ODER VERFLÜSSIGER**
HEAT EXCHANGER, SUCH AS AN EVAPORATOR OR CONDENSER
ECHANGEUR THERMIQUE, TEL QU'UN EVAPORATEUR OU UN CONDENSEUR

(30) Priorität: 08.10.1999 DE 19948480
(43) Veröffentlichungstag der Anmeldung: 17.07.2002
(73) Patentinhaber: BSH Bosch und Siemens Hausgeräte GmbH, 81739 München (DE)
(72) Erfinder: MACK, Hans-Christian, 89567 Sontheim/Bergenweiler (DE); LIPP, Walter, 89437 Haunsheim (DE); NEUMANN, Michael, 89537 Giengen/Brenz (DE)
(86) Internationale Anmeldenummer: PCT/EP2000/009734
(87) Internationale Veröffentlichungsnummer: WO 2001/027551

(56) Entgegenhaltungen:
- EP-A- 0 109 043
- EP-A- 0 974 794
- EP-A- 1 006 324
- WO-A-86/00219
- DE-A- 2 131 430
- DE-A- 3 605 891
- DE-A- 4 036 392
- DE-B- 1 151 529
- DE-C- 926 553
- DE-U- 9 115 282
- DE-U- 29 605 781
- US-A- 2 191 198
- US-A- 4 459 826
- US-A- 4 931 333

## Beschreibung

Die Erfindung betrifft einen Wärmetauscher, wie einen Verdampfer oder einen Verflüssiger für ein Kältegerät wie einen Kühlschrank oder einen Gefrierschrank mit wenigstens einer am Wärmetauscher vorgesehenen Fläche, mit welcher ein thermisches Energiespeichermedium in weitestgehend wärmeleitenden Kontakt steht.

Ein Wärmetauscher gemäß dem Oberbegriff von Anspruch 1 ist 2.3. aus der DE 2 131 430 oder der US 4 459 826 bekannt .

Aus der EP 0 843 138 A1 und der EP 0 714 396 A1 ist je ein platinenartiger Wärmetauscher bekannt, welcher je einen zur Aufnahme eines thermischen Energiespeichermediums oder eines sog. Eutektikums dienenden Aufnahmeraum aufweist. Der Aufnahmeraum ist in beiden Fällen durch eine wannenartig ausgebildete, am platinenartigen Wärmetauscher festgesetzte Platinenwand gebildet, deren freie Ränder flüssigkeitsdicht am Wärmetauscher festgesetzt sind und durch deren Wannenwölbung der Aufnahmeraum für das thermische Energiespeichermedium gebildet ist. Derartige Wärmetauscher bewirken zwar eine Verbesserung der Energieverbrauchswerte bei Kältegeräten wie beispielsweise Kühlschränken, jedoch ist die Ausbildung des Wärmetauschers mit seinem Aufnahmeraum für das Eutektikum äußerst unflexibel, da eine derartige Konstruktion bei einer bedarfsgemäß notwendigen Änderung der Aufnahmekapazität des Ausnahmebehältnisses und damit der Einfüllmasse des thermischen Energiespeichermediums zwangsläufig für die anforderungsbedingt unterschiedlich ausgelegten Wärmetauscher eine entsprechende Vielfalt von das Aufnahmevolumen beeinflussenden, unterschiedlich gewölbtgeformten Platinenwänden erfordert. Ein derartiges Erfordernis trägt nicht nur aufgrund der deutlich gestiegenen Logistikanforderungen sondern auch aufgrund der durch die unterschiedliche Gestaltung der gewölbten Wandplatinen erforderlichen unterschiedlichen Werkzeuge zur erheblichen Kostensteigerung der Wärmetauscher bei. Außerdem birgt die aus dem Stand der Technik bekannte Konstruktion des Aufnahmeraums für das Eutektikum die Gefahr von potentiellen Leckagen durch den komplexeren Aufbau der Wärmetauscherplatinen in sich. Darüber hinaus bedeutet das aus dem Stand der Technik bekannt gewordene Prinzip zur Schaffung eines Aufnahmeraums für ein thermisches Energiespeichermedium die vollkommene Abkehr von herkömmlichen Wärmetauscherplatinen, insbesondere Verdampferplatinen, wenn es darum geht, die Energieeffizienz von Kältegeräten zu verbessern.

Aus der US 4,459,826 ist ein Aufnahmebehälter für ein Energiespeichermedium bekannt, bei dem das Energiespeichermedium von einer biegsamen, flachen und Vinylchlorid aufweisenden Tasche umgeben ist. Die biegsame Tasche ist von unten mit einem Gehäuse umgeben und das Energiespeichermedium kontaktiert über die biegsame Tasche direkt die untere Oberfläche eines Wärmetauschers.

Der DE 2131430 A ist ein Speichermassebehälter zu entnehmen, der aus zumindest zum Ausgleich der Dichteänderung in ausreichendem Umfang verformbare Kunststoffteile, die durch Verschweißung längs vorgegebener Nähte und gegebenenfalls auch Punkte elastische Hohlgefäße bilden, in denen die Speichermasse eingeschlossen ist.

Der Erfindung liegt die Aufgabe zugrunde, mit einfachen konstruktiven Maßnahmen die beim Stand der Technik auftretenden Nachteile zu vermeiden.

Diese Aufgabe wird gemäß der Erfindung durch die Merkmale von Anspruch 1 gelöst. Hierdurch ist sichergestellt, daß die Volumenvergrößerung des vom flüssigen in den festen Aggregatzustand übergehenden thermischen Energiespeichermediums nicht zu einer Zerstörung des Aufnahmebehältnisses führt.

Durch die Bereitstellung wenigstens eines vom Wärmetauscher entkoppelbaren separaten Behältnisses zur Aufnahme des thermischen Energiespeichermediums lassen sich herkömmliche Wärmetauscherkonstruktionen mit dem Aufnahmebehältnis und somit mit dem thermischen Energiespeichermedium zu einer deutlichen Energieeinsparung des kältegerätes, welche beispielsweise im Bereich zwischen 5 und 15% liegen kann, kombinieren. Durch die Kombinationsmöglichkeit und der damit gegebenen Verwendung herkömmlicher Wärmetauscher bedarf es im Hinblick auf den Einsatz von termischen Energiespeichermedien keiner Wärmetauscher-Neukonstruktion, wodurch sich nicht nur kostenaufwendige Entwicklungs- und Konstruktionsarbeit erübrigt sondern zugleich die zur Herstellung der neuen Wärmetauscherkonstruktionen anfallenden Kosten entfallen. Durch die Ausbildung eines separaten Aufnahmebehältnisses läßt sich dieses besonders zielgerichtet und damit mit hoher Effizienz hinsichtlich seiner Größe, seiner Befüllung mit einem thermischen Energiespeichermedium sowie seines Befüllungsgrades an einen vorbestimmten Einsatzzweck z. B. für einen Verdampfer eines Kühlschrankes oder einen Verdampfer eines Gefrierschrankes anpassen. Darüber hinaus ermöglicht das separate Aufnahmebehältnis einen von der Wärmetauscherfertigung völlig unabhängige und somit einen äußerst flexiblen Fertigungsablauf, wie beispielsweise im Hinblick auf das zu seiner Herstellung verwendete Material, seine Größe und Geometrie sowie auch seiner Befüllung mit dem thermischen Energiespeichermedium.

Gemäß der Erfindung ist vorgesehen, daß das Aufnahmebehältnis weitestgehend aus biegeschlaffen Werkstoff gebildet ist.

Unter biegeschlaffem Werkstoff soll in diesem Zusammenhang ein Werkstoff gemeint sein, der nachgiebig ausgebildet und sich zumindest weitestgehend an verschieden gestaltete Oberflächenkonturen anzupassen vermag. Die Anpassung soll dabei mit relativ geringem Kraftaufwand erfolgen können. Beispielsweise sollen hierunter folienartige, dünnwandige Werkstoffe fallen.

Durch die Bereitstellung des Aufnahmebehältnisses aus allseitig biegeschlaffen Werkstoff läßt sich dieses in einer Serienfertigung barrierefrei und somit auf besonders einfache Weise mit dem Wärmetauscher, beispielsweise in Form einer Verdampferplatine oder eines Drahtrohrverdampfers, besonders effizient in wärmeleitenden Kontakt bringen. Außerdem lassen sich aus biegeschlaffem Werkstoff gebildete Aufnahmebehältnisse rasch und kraftsparend in den durch die Drahtstäbe bei Drahtrohrverdampfern erzeugten Zwischenraum einfügen.

Besonders einfach herstellbar ist ein platinenartiger Verdampfer, wie beispielsweise ein im Rollbondverfahren hergestellter sogenannter Coldwall-Verdampfer, wenn nach einer weiteren bevorzugten Ausführungsform des Gegenstandes der Erfindung vorgesehen ist, daß der Wärmetauscher als Verdampferplatine ausgebildet und an einer seiner Wärmetauschflächen mit der biegeschlaffen Wand des Aufnahmebehältnisses zumindest weitestgehend wärmeleitend und wenigstens annähernd flüssigkeitsdicht verbunden ist.

Bei einem als Coldwall-Verdampfer ausgebildetem Wärmetauscher ist das Aufnahmebehältnis aus einem gegenüber dem thermischen Energiespeichermedium beständigen und diffusionsdichten Material mit einer Temperaturbeständigkeit von wenigstens 170° Celsius gefertigt. Durch die Anordnung der biegeschlaffen Wand zur Verdampferplatine ist ein besonders intensiver wärmeleitender Kontakt zwischen dem Aufnahmebehältnis und der Verdampferplatine hergestellt, da die biegeschlaffe Wand sich an unterschiedliche Konturen der Verdampferplatine, wie beispielsweise deren Kanalbild anschmiegt. Durch die Möglichkeit der getrennten Fertigung des Aufnahmebehältnisses einerseits und der Verdampferplatine andererseits ergibt sich für letztere der herkömmliche, bewährte Fertigungsprozeß.

Besonders günstig auf die Energieeinsparung bei Kältegeräten wirkt sich das in wärmeleitenden Kontakt mit der Verdampferplatine stehende Aufnahmebehältnis aus, wenn nach einer weiteren vorteilhaften Ausführungsform des Gegenstandes der Erfindung vorgesehen ist, daß das Aufnahmebehältnis wenigstens an seiner in wärmeleitenden Kontakt mit der Verdampferplatine stehenden biegeschlaffen Wand zumindest weitestgehend an die Abmessungen der Verdampferplatine angepaßt ist.

Auf besonders einfache und äußerst effiziente Weise in wärmeleitenden Kontakt läßt sich das mit dem thermischen Energiespeichermedium befüllte Aufnahmebehältnis mit einem als Drahtrohrverdampfer ausgebildeten Wärmetauscher bringen, wenn nach einer alternativen Ausführungsform des Gegenstandes der Erfindung vorgesehen ist, daß der Wärmetauscher als Drahtrohrverdampfer ausgebildet und zwischen seinen eine meanderartig verlaufende Kältemittelleitung überspannenden Drahtstabebenen mit wenigstens einem Aufnahmebehältnis ausgestattet ist.

Durch die Ausbildung des Aufnahmebehältnisses aus allseitig biegeschlaffem Material läßt sich das Aufnahmebehältnis auch im mit eutektischer Lösung befüllten Zustand rasch und problemlos zwischen die Drahtstabebenen einfügen, wobei durch die biegeschlaffen Wände des Aufnahmebehältnisses ein besonders intensiver wärmeleitender Kontakt, sowohl mit den Drahtstabebenen als auch mit der meanderartig verlaufenden Kältemittelleitung erreicht ist.

Nach einer nächsten vorteilhaften Ausgestaltung des Gegenstandes der Erfindung ist vorgesehen, daß das bei einem Drahtrohrverdampfer zwischen dessen Drahtstabebenen angeordenete Aufnahmebehältnis von einer zumindest durchstoßresistenten Schutzhülle umgeben ist.

Hierdurch ist auf einfache Weise sichergestellt, daß das aus biegeschlaffem Material gebildete Aufnahmebehältnis nicht in unbeabsichtigter Weise beschädigt wird.

Besonders einfach und kostengünstig herstellen läßt sich das Aufnahmebehältnis aus biegeschlaffem Material, wenn nach einer weiteren bevorzugten Ausführunggsform des Gegenstandes der Erfindung vorgesehen ist, daß das Aufnahmebehältnis zumindest annähernd in Art eines Beutels ausgebildet ist. Durch eine derartige Ausbildung läßt sich das Aufnahmebehältnis nach seinem Befüllen mit einem thermischen Energiespeichermedium kostengünstig mit herkömmlichen Verschlußtechniken, wie beispielsweise Verschweißen oder dergl. flüssigkeitsdicht verschließen.

Entsprechend einer nächsten bevorzugten Ausführungsform des Gegenstandes der Erfindung ist vorgesehen, daß der Beutel hinsichtlich seines Aufnahmeraumes in wenigstens zwei sein Aufnahmevolumen unterteilende, voneinander unabhängige Teilvolumina unterteilt ist.

Durch die Unterteilung des Aufnahmevolumens des beutelartigen Aufnahmebehältnisses in z.B. eine Mehrzahl vollständig voneinander getrennter Teilvolumina ist das "Handling" des Aufnahmebehältnisses, aufgrund der einem Teilvolumen zugeordneten verhältnismäßig geringen Menge an thermischen Energiespeichermedium im Fertigungsablauf der Wärmetauscher und der damit bestückten Kältegeräte, deutlich erleichtert. Für den Fall, daß das beutelartige Aufnahmebehältnis mit einer Mehrzahl von sein Aufnahmevolumen unterteilenden Teilvolumina bei einer vertikal angeordneten Kühlgeräteverdampferplatine zum Einsatz kommt ist durch die Teilvolumina sichergestellt, daß das thermische Energiespeichermedium trotz der vertikalen Anordnung des Aufnahmebehältnisses im wesentlichen gleichmäßig über die mit dem Aufnahmebehältnis in wärmeleitenden Kontakt stehenden Verdampferfläche verteilt ist. Zusätzlich ist durch die Aufteilung des Aufnahmevolumens des Aufnahmebehältnisses in eine Mehrzahl von Teilaufnahmeräumen bei sogenannten Coldwall-Verdampfern verhindert, daß das aufschäumende Wärmeisolationsmaterial das flüssige, thermische Energiespeichermedium in eine infolge des Ausschäumens des wärmeisolierenden Gehäuses eines Kältegerätes vorbestimmte Richtung zusammendrängt und somit der großflächige Kontakt des thermischen Energiespeichermediums mit der Verdampferplatine aufgehoben ist.

Nach einer weiteren bevorzugten Ausführungsform des Gegenstandes der Erfindung ist vorgesehen, daß das Aufnahmebehältnis aus einem metallischen Werkstoff mit folienartiger Materialstrecke gebildet ist. Durch die Herstellung des Aufnahmebehältnisses aus folienartigen Metallen wie z. B. Aluminium, Edelstahl oder dergl. ist ohne zusätzliche Schutzhülle ein verhältnismäßig durchstoßresistentes Aufnahmebehältnis für das flüssige Eutektikum geschaffen. Bei der Anwendung einer Aluminiumfolie ist nicht nur ein besonders günstiger Wärmeübergang zum Wärmetauscher erreicht sondern im Falle einer Kunststoffkaschierung, aufgrund welcher die das Aufnahmevolumen der Aufnahmeräume umgrenzende Folienseite mit einer Kunststoffschicht versehen ist, läßt sich das aus einer Aluminiumfolie gebildete Aufnahmebehältnis beispielsweise durch Verschweißen kostengünstig flüssigkeitsdicht verschließen.

Besonders kostengünstig herstellbar ist ein flüssigkeitsdichtes Aufnahmebehältnis mit sein Aufnahmevolumen unterteilenden Teilaufnahmeräume, wenn nach einer alternativen Aufführungsform des Gegenstandes der Erfindung vorgesehen ist, daß das Aufnahmebehältnis aus einer Kunststoffolie gebildet ist.

Besonders günstig hinsichtlich der Wärmeübertragung einerseits und eines flüssigkeitsdichten Verschlusses der die Teilvolumina aufnehmenden Teilaufnahmeräume andererseits ausgebildet ist ein Aufnahmebehältnis, wenn nach einer nächsten alternativen Ausführungsform des Gegenstandes der Erfindung vorgesehen ist, daß das Aufnahmebehältnis aus mit einer kunststoffkaschierten Aluminiumfolie gebildet ist.

Die Erfindung ist in der nachfolgenden Beschreibung anhand von zwei in der beifügten Zeichnung vereinfacht dargestellten Ausführungsbeispielen erläutert. Es zeigen:
- Figur 1:: vereinfacht schematisch einen Haushaltskühlschrank mit einer ersten Anwendungsvariante eines mit einem thermischen Energiespeichermedium befüllten und in wärmeleitenden Kontakt mit einem Coldwall Verdampfer angeordneten erfindungsgemäßen Aufnahmebehältnis, in Schnittdarstellung von der Seite,
- Figur 2:: den Haushaltskühlschrank gem. Figur 1 Schnittdarstellung gem. der Schnittlinie in II/II,
- Figur 3:: das erfindungsgemäße Aufnahmebehältnis zur Anwendung in dem Haushaltskühlschrank gem. Fig. 1, in raumbildlicher Ansicht von oben.
- Figur 4:: vereinfacht schematisch einen Haushaltsgefrierschrank mit einer zweiten Anwendungsvariante des erfindungsgemäßen Aufnahmebehältnisses, angeordnet an der obersten und untersten dampferetagere eines Drahtrohrverdampfers, in Schnittdarstel- lung von der Seite,
- Figur 5:: eine der Verdampferetageren gem. Figur 4 in raumbildlicher An- sicht von oben und
- Figur 6:: das erfindungsgemäße Aufnahmebehältnis zur Anwendung in den Haushaltsgefrierschrank gem. Fig. 4 in raumbildelicher An- sicht von oben.

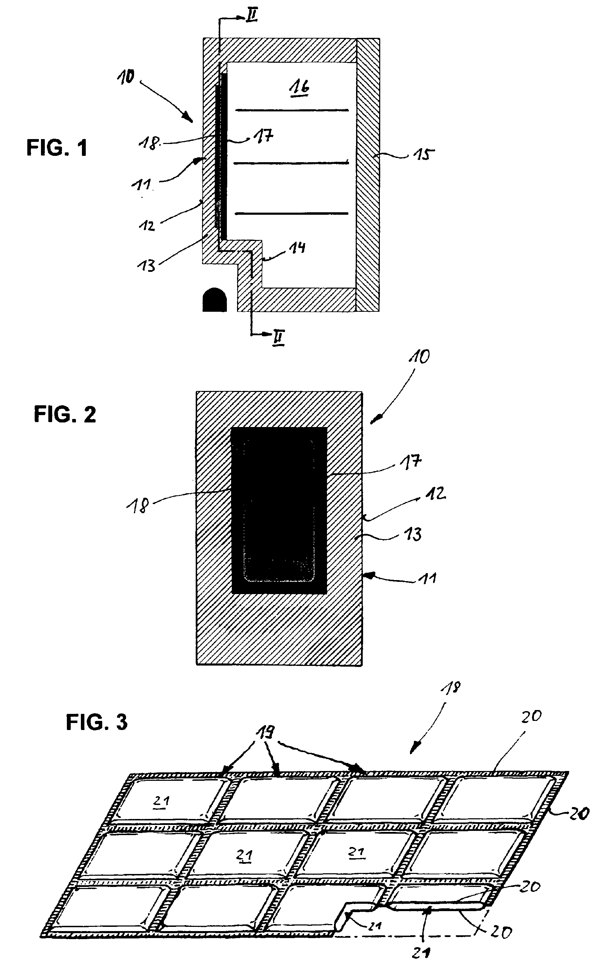

Gemäß Figur 1 ist in vereinfachter schematischer Darstellung ein Haushaltskühlschrank 10 mit einem wärmeisolierenden Gehäuse 11 gezeigt. Dieses besitzt eine Außenverkleidung 12, eine durch Aufschäumen erzeugte Wärmeisolationsschicht 13 und eine durch spanlose Formgebung einer Kunststoffplatine erzeugte Innenverkleidung 14, welche mit der Außenverkleidung 12 anhand des adhäsiv wirkenden Wärmeisolationsschaumes 13 zu einem formsteifen Gebilde verbunden ist. Die Innenverkleidung 14 dient zur Auskleidung eines von einer Tür 15 verschließbaren Kühlraumes 16, welcher von einem wärmeisolationseitig an der Rückwand der Innenverkleidung 14 in wärmeleitenden Kontakt angebrachten Verdampfer 17, einen sog. Coldwall-Verdampfer, gekühlt ist. Der Verdampfer 17 ist beispielsweise im sogenannten Rollbondverfahren hergestellt und mit seiner aufgrund der Herstellart glatten Wärmetauschfläche wärmeleitend mit der Innenverkleidung 14 verbunden, während die mit dem Kanalbild versehene Wärmetauschfläche des Verdampfers 17 der Wärmeisolation 13 zugewandt ist. Die wärmeisolationsseitige Wärmetauschfläche des Verdampfers 17 ist mit einem separaten Aufnahmebehältnis 18 zur Aufnahme eines thermischen Energiespeichermediums in wärmeleitenden Kontakt. Das Aufnahmebehältnis 18 ist im vorliegenden Fall in Art eines Beutels aus biegeschlaffen, dünnwandigen Werkstoff zum Zwecke einer optimalen Anpassung der mit dem Verdampfer 17 in wärmeleitenden Kontakt stehenden Außenseite des Beutels erzeugt. Das in Form eines Beutels ausgebildete, beispielsweise aus einer kunststoffkaschierten Aluminiumfolie hergestellte Aufnahmebehältnis 18 ist zumindest an seinem umlaufenden Rand flüssigkeitsdicht gegen das aufschäumende Wärmeisolationsmaterial 13 an der Verdampferplatine 17 festgesetzt. Das Aufnahmebehältnis 18 besitzt, wie insbesondere Figur 3 zeigt, einen durch die Länge, die Breite und die Höhe des Beutels 18 bestimmten Aufnahmeraum 19, welcher im vorliegenden Fall in mehrere, flüssigkeitsdicht voneinander durch Verschweißen seiner einander gegenüberliegenden Beutelwandungen 20 erzeugten Teilaufnahmeräume 21 unterteilt. Von diesen Teilaufnahmeräumen 21 ist jeder mit einem thermischen Energiespeichermedium (Eutektikum) mit beispielsweise 80% Wasser und 20% Ethanol befüllt, wobei jeder der Teilaufnahmeräume 21 hinsichtlich seines Aufnahmevolumens größer als das durch das thermische Energiespeichermedium im festen Zustand erreichbare Volumen ausgebildet ist, um einer Zerstörung der Teilaufnahmeräume 21 beim Ausgefrieren des Eutektikums vorzubeugen. Zur Herstellung des in Art eines Beutels ausgebildeten Aufnahmebehältnisses 18 eignen sich neben der beispielsweise mit polyethylenkaschierten Aluminiumfolie auch beispielsweise Kunststoffolien aus Polyethylen oder Polyamid, wobei die folienartigen Werkstoffe sowohl diffusionsdicht als auch resistent im Hinblick auf die thermischen Energiespeichermedien auszuwählen sind. Zur Erreichung eines möglichst effizienten Wärmeübergangs vom Verdampfer 17 auf das in seinen Teilaufnahmeräumen 21 mit einem thermischen Energiespeichermedium befüllten Aufnahmebehältnis 18 ist letzteres, wie insbesondere Figur 2 zeigt, hinsichtlich seiner Abmessungen zumindest im wesentlichen auf die Abmessungen des Verdampfers 17 abgestimmt. Das Aufnahmebehältnis 18 könnte auch bis auf die mit dem Verdampfer 17 in wärmeleitenden Kontakt stehende Seite aus biegesteifen Werkstoff gefertigt sein, wobei die dem Verdampfer 17 zugewandte Seite aus biegeschlaffen Werkstoff gebildet ist.

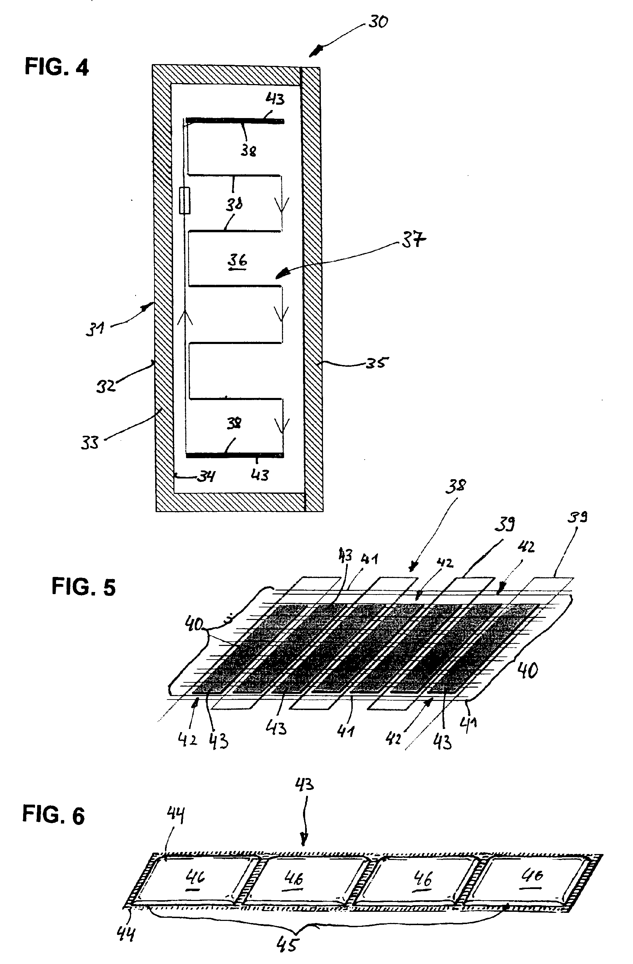

Gemäß Figur 4 ist eine zweite Anwendungsvariante eines aus biegeschlaffen Werkstoff gebildeten separaten, weiter unten genauer erläuterten Aufnahmebehältnisses zur Aufnahme eines thermischen Energiespeichermediums zur Anwendung bei einem Haushaltsgefrierschrank 30 gezeigt. Dieser besitzt wie der Haushaltskühlschrank 10 ein wärmeisolierendes Gehäuse 31 mit einer Außenverkleidung 32, einer durch Aufschäumen erzeugten Wärmeisolationsschicht 33 und einer Kunststoffinnenverkleidung 34. Diese dient zur Auskleidung eines über eine Tür 35 zugänglichen Gefrierraumes 36, in welchem zur Aufrechterhaltung seiner bestimmungsgemäßen Temperatur ein Drahtrohrverdampfersystem 37 mit mehreren parallel übereinander angeordneten Verdampferetageren 38 angeordnet sind. Diese weisen, wie insbesondere Fig. 5 zeigt, eine mäanderartig geformte, als Rohrleitung ausgebildete Kältemittelleitung 39 auf, welche senkrecht zu ihren längeren Mäanderabschnitten mit parallel zueinander angeordneten, einander gegenüberliegende Drahtstabebenen 40 erzeugende Drahtstäbe 41 überspannt sind. Durch die Drahtstabebenen 40 einerseits und durch den mäanderartigen Verlauf der Kältemittelleitung 39 andererseits sind Zwischenräume 42 gebildet, in welche Aufnahmebehältnisse 43 zur Aufnahme eines thermischen Energiespeichermediums eindringbar sind. Die Aufnahmebehältnisse 43, welche vorteilhafter Weise der obersten und untersten Verdampferetagere 38 zugeordnet sind, sind im wesentlichen identisch zu dem Aufnahmebehältnis 18 ausgebildet und lediglich hinsichtlich ihrer Abmessungen auf die Abmessungen der Zwischenräume 42 abgestimmt. Wie das Aufnahmebehältnis 18 sind die Aufnahmebehältnisse 43 in Art eines Beutel ausgebildet, dessen Beutelwände 44 aus biegeschlaffen Werkstoff, wie beispielsweise dünnwandigen, folienartigen Aluminium gebildet sind und sowohl beständig als auch diffusionsdicht gegenüber dem thermischen Energiespeichermedium ausgeführt sind. Die Beutelwände 44 umgrenzen einen durch die Länge, die Breite und die Höhe des Beutels Aufnahmeraum 45, welcher in Teilaufnahmeräume 46 unterteilt ist, von denen jeder gegenüber dem anderen Teilaufnahmeraum 46 hermetisch abgetrennt und zur Aufnahme einer bestimmten Menge eines thermischen Energiespeichermediums dient, wobei das Aufnahmevolumen eines jeden Teilaufnahmeraums 46 zumindest dem Volumen entspricht, welches das thermische Energiespeichermedium in seinem festen Aggregatzustand erreicht. Die separat, unabhängig von dem Drahtrohrverdampfersystem 37 herstellbaren Aufnahmebehältnisse 43 eignen sich insbesondere auch zur Bestückung herkömmlicher Drahtrohrverdampfersysteme 37, wodurch in kostengünstiger Weise eine deutliche Energieeinsparung nämlich im Bereich zwischen 5% und 15% für die Kältegeräte erreicht wird, ohne dabei ein von den herkömmlichen Drahtrohrverdampfersystemen 37 vollkommen abweichendes neues Drahtrohrverdampfersystem entwickeln und fertigen zu müssen. Um die Aufnahmebehältnisse 43 gegebenenfalls vor unbeabsichtigter Zerstörung zu schützen, kann vorgesehen sein, daß diese von einer durchstoßresistenten Schutzhülle umgeben sind. Für den Fall, daß die Aufnahmebehältnisse 43 beispielsweise aus einer kunststoffkaschierten Aluminiumfolie gebildet sind, wobei sich auch Polyethylen- und Polyamidkunststoffolien eignen, ist bereits eine gewisse Durchstoßsicherheit erreicht, so daß auf eine zusätzliche Schutzhülle verzichtet werden kann. Die aus biegeschlaffen Werkstoff gefertigten Aufnahmebehältnisse besitzen die Eigenschaft, sich besonders effizient in wärmeleitenden Kontakt zu den Drahtstabebenen 40 einerseits aber auch zu der Kältemittelleitung 39 andererseits zur Erreichung eines effizienten Wärmeaustausches anzulegen.

## Patentansprüche

1. Wärmetauscher (17,38) wie Verdampfer oder Verflüssiger für ein Kältegerät wie einen Kühlschrank oder Gefrierschrank mit einem thermischen Energiespeichermedium, wobei der Wärmetauscher wenigstens mit einer seiner Seiten in weitestgehend wärmeleitendem Kontakt mit dem thermischen Energiespeichermedium steht, und wobei wenigstens ein zur Aufnahme des thermischen Energiespeichermediums dienendes separates Aufnahmebehältnis (18, 43) vorgesehen ist, welches eine annähernd biegeschlaffe Behältniswand (20, 44) aufweist, welche sich durch ihre biegeschlaffen Eigenschaften wenigstens annähernd in wärmeleitendem Kontakt an den Wärmetauscher (17, 38) anlegt,
**dadurch gekennzeichnet, dass**
das Aufnahmebehältnis (18, 43) hinsichtlich seines durch den Aufnahmeraum (19, 45) gebildeten Aufnahmevolumens oder im Hinblick eines jeden Teilaufnahmevolumens eines Teilaufnahmeraumes (21, 46) größer als das Volumen des thermischen Energiespeichermediums in festem Aggregatzustand ausgebildet ist.

2. Wärmetauscher nach Anspruch 1, **dadurch gekennzeichnet, daß** das Aufnahmebehältnis (18, 43) weistestgehend aus biegeschlaffen Werkstoff gebildet ist.

3. Wärmetauscher nach einem der Ansprüche 1 oder 2, **dadurch gekennzeichnet, daß** der Wärmetauscher als Verdampferplatine (17) ausgebildet ist und an einer seiner Wärmetauschflächen mit der biegeschlaffen Wand (20, 44) des Aufnahmebehältnisses (18) in dem weitestgehend wärmeleitenden Kontakt angeordnet und wenigstens annähernd flüssigkeitsdicht an die Wärmetauschfläche angekoppelt ist.

4. Wärmetauscher nach Anspruch 3, **dadurch gekennzeichnet, daß** das Aufnahmebehältnis (18) wenigstens an seine in wärmeleitende Kontakt mit der Verdampferplatine (17) stehenden biegeschlaffen Wand weitestgehend an die Abmessungen der Verdampferplatine (17) angepaßt ist.

5. Wärmetauscher nach einem der Ansprüche 1 oder 2, **dadurch gekennzeichnet, daß** der Wärmetauscher als Drahtrohverdampfersystem (37) ausgebildet und zwischen seinen eine mäanderartig verlaufende Kältemittelleitung (39) überspannenden Drahtstabebenen (40) mit dem Aufnahmebehältnis (43) ausgestattet ist.

6. Wärmetauscher nach Anspruch 5, **dadurch gekennzeichnet, daß** das bei dem Drahtrohrverdampfersystem (37) zwischen den Drahtstabebenen (40) angeordnete Aufnahmebehältnis (43) von einer zumindest durchstoßresistenten Schutzhülle umgeben ist.

7. Wärmetauscher nach einem der Ansprüche 1 bis 6, **dadurch gekennzeichnet, daß** das Aufnahmebehältnis (18, 43) annähernd in Art eines Beutels ausgebildet ist.

8. Wärmetauscher nach Anspruch 7, **dadurch gekennzeichnet, daß** der Beutel hinsichtlich seines Aufnahmeraums (19, 45) in wenigstens zwei von dessen Aufnahmevolumen unterteilende, voneinander unabhängige Teilaufnahmeräume (21, 46) unterteilt ist.

9. Wärmetauscher nach einem der Ansprüche 1 bis 8, **dadurch gekennzeichnet, daß** das Aufnahmebehältnis (18, 43) aus metallischen Werkstoff mit folienartiger Materialstärke gebildet ist.

10. Wärmetauscher nach einem der Ansprüche 1 bis 8, **dadurch gekennzeichnet, daß** das Aufnahmebehältnis (18, 43) aus einer Kunststoffolie gebildet ist.

11. Wärmetauscher nach einem der Ansprüche 1 bis 8, **dadurch gekennzeichnet, daß** das Aufnahmebehältnis (18, 43) aus einer mit Kunststoff kaschierten Aluminiumfolie gebildet ist.

## Claims

1. Heat exchanger (17, 38) such as an evaporator or a condensor for a refrigerating appliance such as a refrigerator or freezer, with a thermal energy storage medium, wherein the heat exchanger at at least one of its sides is in substantially thermally conductive contact with the thermal energy storage medium and wherein at least one separate receiving container (18, 43) serving for receiving the thermal energy storage medium is provided, which has a container wall (20, 44) which is approximately slack in bending and by virtue of its characteristics of being slack in bending rests at least approximately in thermally conductive contact with the heat exchanger (17, 38), **characterised in that** the receiving container (18, 43) is with respect to its receiving volume formed by the receiving space (19, 45) or with respect to each part receiving volume of a part receiving space (21, 46) constructed to be greater than the volume of the thermal energy storage medium in solid aggregate state.

2. Heat exchanger according to claim 1, **characterised in that** the receiving container (18, 43) is formed substantially from material slack in bending.

3. Heat exchanger according to one of claims 1 and 2, **characterised in that** the heat exchanger is constructed as an evaporator plate (17) and is arranged at one of its heat exchange surfaces in the substantially thermally conductive contact with the wall (20, 44), which is slack in bending, of the receiving container (18) and is coupled at least approximately fluid-tightly with the heat exchange surface.

4. Heat exchanger according to claim 3, **characterised in that** the receiving container (18) is substantially adapted at its wall, which is disposed in thermally conductive contact with the evaporator plate (17) and is slack in bending, to the dimensions of the evaporator plate (17).

5. Heat exchanger according to one of claims 1 and 2, **characterised in that** the heat exchanger is constructed as a wire tube evaporator system (37) and is equipped with the receiving container (43) between its wire rod planes (40) spanning a refrigerant duct (39) extending in meander form.

6. Heat exchanger according to claim 5, **characterised in that** the receiving container (43) arranged in the case of the wire tube evaporator system (37) between the wire rod planes (40) is surrounded by an at least puncture-resistant protective casing.

7. Heat exchanger according to any one of claims 1 to 6, **characterised in that** the receiving container (18, 43) is constructed approximately in the form of a bag.

8. Heat exchanger according to claim 7, **characterised in that** the bag is subdivided with respect to its receiving space (19, 45) into at least two mutually independent part receiving spaces (21, 46) subdividing the receiving volume of the receiving space.

9. Heat exchanger according to any one of claims 1 to 8, **characterised in that** the receiving container (18, 43) is formed from metallic material with a foil-like material thickness.

10. Heat exchanger according to any one of claims 1 to 8, **characterised in that** the receiving container (18, 43) is formed from a plastics material film.

11. Heat exchanger according to any one of claims 1 to 8, **characterised in that** the receiving container (18, 43) is formed from an aluminium foil coated with a plastics material.

## Revendications

1. Echangeur thermique (17, 38), tel qu'évaporateur ou condenseur, pour un appareil frigorifique, comme un réfrigérateur ou un congélateur, muni d'un fluide thermique accumulateur d'énergie, l'échangeur thermique étant en contact en très grande partie thermoconducteur avec le fluide thermique accumulateur d'énergie au moins au moyen de l'un de ses côtés, et au moins un récipient de réception (18, 43) séparé servant à la réception du fluide thermique accumulateur d'énergie étant prévu, lequel récipient présente une paroi de récipient (20, 44) approximativement flexible, laquelle, en raison de ses propriétés flexibles, s'appuie sur l'échangeur thermique (17, 38) au moins en étant approximativement en contact thermoconducteur,
**caractérisé en ce que**
le récipient de réception (18, 43), en ce qui concerne son volume de réception formé par la chambre de réception (19, 45) ou en ce qui concerne un volume partiel de réception d'une chambre de réception partielle (21, 46) est réalisé de manière plus grande que le volume du fluide thermique accumulateur d'énergie à l'état d'agrégat solide.

2. Echangeur thermique selon la revendication 1, **caractérisé en ce que** le récipient de réception (18, 43) est réalisé en grande partie en matière flexible.

3. Echangeur thermique selon l'une quelconque des revendications 1 ou 2, **caractérisé en ce que** l'échangeur thermique est réalisé en tant que platine d'évaporateur (17) et est disposé, sur l'une de ses surfaces d'échange thermique, en étant en contact en très grande partie thermoconducteur avec la paroi flexible (20, 44) du récipient de réception (18) et est couplé à la surface d'échange thermique au moins de manière approximativement étanche au liquide.

4. Echangeur thermique selon la revendication 3, **caractérisé en ce que** le récipient de réception (18) est adapté en grande partie aux dimensions de la platine d'évaporateur (17) au moins sur sa paroi flexible se trouvant en contact thermoconducteur avec la platine d'évaporateur (17).

5. Echangeur thermique selon l'une quelconque des revendications 1 ou 2, **caractérisé en ce que** l'échangeur thermique est réalisé en tant que système évaporateur tubulaire (37) et est équipé du récipient de réception (43) entre ses niveaux de barres métalliques (40) enjambant une conduite de fluide frigorifique (39) s'étendant en forme de méandres.

6. Echangeur thermique selon la revendication 5, **caractérisé en ce que** le récipient de réception (43) disposé dans le système évaporateur tubulaire (37) entre les niveaux de barres métalliques (40) est entouré par une gaine protectrice au moins résistante aux perforations.

7. Echangeur thermique selon l'une quelconque des revendications 1 à 6, **caractérisé en ce que** le récipient de réception (18, 43) est réalisé approximativement de manière similaire à un sac.

8. Echangeur thermique selon la revendication 7, **caractérisé en ce que** le sac, en ce qui concerne sa chambre de réception (19, 45), est divisé en au moins deux chambres de réception partielle (21, 46) indépendantes l'une de l'autre, divisant les volumes de réception de la chambre de réception.

9. Echangeur thermique selon l'une quelconque des revendications 1 à 8, **caractérisé en ce que** le récipient de réception (18, 43) est formé en matière métallique à épaisseur de matériau semblable à une feuille.

10. Echangeur thermique selon l'une quelconque des revendications 1 à 8, **caractérisé en ce que** le récipient de réception (18, 43) est formé à partir d'une feuille plastique.

11. Echangeur thermique selon l'une quelconque des revendications 1 à 8, **caractérisé en ce que** le récipient de réception (18, 43) est formé à partir d'une feuille d'aluminium doublée de matière plastique.
